# EUROPÄISCHE PATENTANMELDUNG

(11) **EP 2 163 866 A1**
(43) Veröffentlichungstag der Anmeldung: **17.03.2010**
(21) Anmeldenummer: 09169749.0
(22) Anmeldetag: 08.09.2009
(51) Int. Cl.: G01F 23/74, B01D 36/00, F02M 37/22

(54) **Flüssigkeitspegelsensor**

(30) Priorität: 10.09.2008 US 207934
(71) Anmelder: Mahle International GmbH, 70376 Stuttgart (DE)
(72) Erfinder: Belanger, Ken, Michigan, 48079 (US); Johnson, Darren, Romulus, MI 48174 (US); Jensen, Hans, 73230 Kirchheim (DE); Xia, Zhouxuan, Windsor Ontario N9G 2R5 (CA)
(74) Vertreter: BRP Renaud & Partner

(57) **Zusammenfassung**

Es wird ein Behälter zum Sammeln von Wasser, das von einer Versorgung von Treibstoff auf Kohlenwasserstoffbasis entfernt wird, offenbart. Der Behälter kann ein Basiselement und eine Abdeckung enthalten, die mit dem Basiselement zusammenwirkt, um ein Reservoir zur Aufnahme einer Flüssigkeit zu definieren. Die Abdeckung definiert eine Tasche, die integral mit der Abdeckung gebildet sein kann, wobei die Tasche im Allgemeinen ein Eindringen der Flüssigkeit in das Reservoir verhindert. Der Behälter enthält des Weiteren einen Flüssigkeitspegelsensor, der einen Schalter enthält, der in der Tasche aufgenommen ist, und ein Stellglied, das so konfiguriert ist, dass es den Schalter aktiviert, wenn das Fluid in dem Reservoir einen vorbestimmten Pegel erreicht.

## Beschreibung

### Hintergrund

Wasser kann sich auf natürliche Weise in Treibstoffen auf Kohlenwasserstoffbasis durch eine Reihe bekannter Mechanismen ansammeln. Zum Beispiel kann Wasserdampf in Treibstoff, der in einem geschlossenen Tank oder Behälter über einen längeren Zeitraum gelagert wird, kondensieren. Wasser kann sich auch in Treibstoffen auf Kohlenwasserstoffbasis während des Transports von Raffinerien zu Tankstellen ansammeln. Die Ansammlung von Wasser in einem Treibstoff auf Kohlenwasserstoffbasis ist für Verbrennungsmotoren, und insbesondere Dieselmotoren, problematisch, da sie eine Korrosion und/oder ein Wachstum von Mikroorganismen verursachen kann, die Motorkomponenten beschädigen können.

Es wurden verschiedene Methoden zur Entfernung angesammelten Wassers aus Treibstoffen auf Kohlenwasserstoffbasis entwickelt. Wasser, das von Treibstoffen auf Kohlenwasserstoffbasis gesammelt wird, muss jedoch für gewöhnlich an Bord eines Fahrzeuges gelagert werden, bis das Wasser entfernt werden kann. Wenn Wasser nicht regelmäßig entfernt wird, können die Wasserentfernungssysteme einen Rückstau erfahren, wodurch ein weiteres Sammeln angesammelten Wassers von dem Treibstoffsystem verhindert wird.

Es können Sensoren in einem Reservoir bereitgestellt sein, die einen Fahrzeugbetreiber benachrichtigen, wenn das Reservoir voll ist. Solche Systeme erhöhen jedoch im Allgemeinen die Komplexität des Reservoirs, wodurch Wartungs-/Austauschkosten des Wasserentfernungssystems steigen. Zum Beispiel müssen die Sensoren im Allgemeinen an einem Bodenteil eines Reservoirs montiert werden, um eine Wassermenge, die in dem Reservoir enthalten ist, exakt zu bestimmen. Der Einbau von Sensoren an einem Bodenteil des Reservoirs ist im Allgemeinen unpraktisch, da Monteure unter ein installiertes Reservoir greifen müssen, um die Verbindungen herzustellen, die notwendig sind, damit die Sensoren mit einer Anzeige kommunizieren können, die einen Fahrzeugbetreiber darauf hinweist, dass das Reservoir voll ist.

Daher besteht ein Bedarf an einem Reservoir zum Sammeln von Wasser, das von einer Treibstoffversorgung auf Kohlenwasserstoffbasis entfernt wurde, das eine Überwachung einer Wassermenge, die sich in dem Reservoir angesammelt hat, ermöglicht und dennoch relativ einfach zusammenzubauen und in einem Fahrzeug einzubauen ist.

Hierin sind verschiedene beispielhafte Darstellungen eines Behälters oder Tanks zum Sammeln von Wasser, das von einer Treibstoffversorgung auf Kohlenwasserstoffbasis entfernt wurde, offenbart. Gemäß einer beispielhaften Darstellung kann ein Behälter ein Basiselement und eine Abdeckung enthalten, die mit dem Basiselement zusammenwirkt, um ein Reservoir zur Aufnahme einer Flüssigkeit zu definieren. Die Abdeckung definiert eine Tasche, die integral mit der Abdeckung gebildet sein kann, wobei die Tasche im Allgemeinen den Eintritt der Flüssigkeit in das Reservoir verhindert. Der Behälter enthält des Weiteren einen Flüssigkeitspegelsensor, der einen Schalter enthält, der in der Tasche aufgenommen ist, und ein Stellglied, das so konfiguriert ist, dass es den Schalter aktiviert, wenn das Fluid in dem Reservoir einen vorbestimmten Pegel erreicht.

Eine weitere beispielhafte Darstellung eines Behälters enthält ein Basiselement und eine Abdeckung, die mit dem Basiselement zusammenwirkt, um ein Reservoir zur Aufnahme einer Flüssigkeit zu definieren. Die Abdeckung kann ein Gehäuse und eine Tasche enthalten, die außerhalb des Reservoirs angeordnet ist, die so konfiguriert ist, dass im Allgemeinen ein Eindringen von Flüssigkeit, die in dem Reservoir enthalten ist, verhindert wird. Das Gefäß enthält des Weiteren einen Flüssigkeitspegelsensor, der einen Schalter enthält, der in der Tasche aufgenommen ist, und ein Stellglied, das so konfiguriert ist, dass es den Schalter aktiviert, wenn das Fluid in dem Reservoir einen vorbestimmten Pegel erreicht.

### Kurze Beschreibung der Zeichnungen

Während die Ansprüche nicht auf die dargestellten Ausführungsformen beschränkt sind, werden die verschiedenen Aspekte am Besten durch eine Besprechung verschiedener Beispiele offensichtlich. Unter Bezugnahme nun auf die Zeichnungen sind veranschaulichende Ausführungsformen im Detail dargestellt. Obwohl die Zeichnungen die Ausführungsformen darstellen, sind die Zeichnungen nicht unbedingt maßstabgetreu und gewisse Merkmale können zur besseren Darstellung und Erklärung eines innovativen Aspekts einer Ausführungsform übertrieben sein. Ferner sollen die hierin beschriebenen Ausführungsformen nicht umfassend oder auf andere Weise einschränkend oder auf die präzise Form und Konfiguration, die in den Zeichnungen dargestellt und in der folgenden ausführlichen Beschreibung offenbart ist, eingrenzend sein. Beispielhafte Ausführungsformen der vorliegenden Erfindung sind unter Bezugnahme auf die folgenden Zeichnungen ausführlich beschrieben.

Fig. 1A ist eine abgeschnittene perspektivische Ansicht eines ersten Beispiels eines Behälters;

Fig. 1B ist eine perspektivische Bodenansicht einer Abdeckung für das erste Beispiel eines Behälters;

Fig. 2 ist eine Schnittansicht des ersten Beispiels eines Behälters;

Fig. 3 ist eine perspektivische Ansicht eines zweiten Beispiels eines Behälters;

Fig. 4 ist eine perspektivische Bodenansicht des zweiten Beispiels einer Abdeckung für einen Behälter;

Fig. 5A ist eine teilweise abgeschnittene Ansicht der Abdeckung von Fig. 4 entlang der Linie 5A-5A; und

Fig. 5B ist eine teilweise abgeschnittene Ansicht der Abdeckung von Fig. 4 entlang der Linie 5B-5B.

### Ausführliche Beschreibung

Ein Verweis in der Beschreibung auf "eine beispielhafte Darstellung" und ein "Beispiel" oder eine ähnliche Bezeichnung bedeutet, dass ein bestimmtes Merkmal, eine bestimmte Struktur oder Eigenschaft, die in Verbindung mit der beispielhaften Methode beschrieben ist, in mindestens einer Darstellung enthalten ist. Das Erscheinen der Phrase "in einer Darstellung" oder einer ähnlichen Bezeichnung an verschiedenen Stellen in der Beschreibung bezieht sich nicht unbedingt auf dieselbe Darstellung oder dasselbe Beispiel.

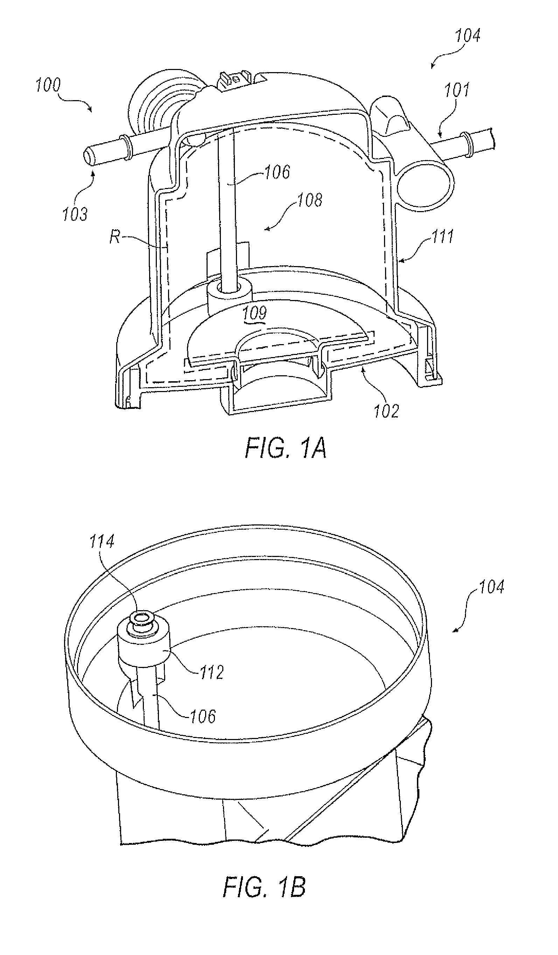

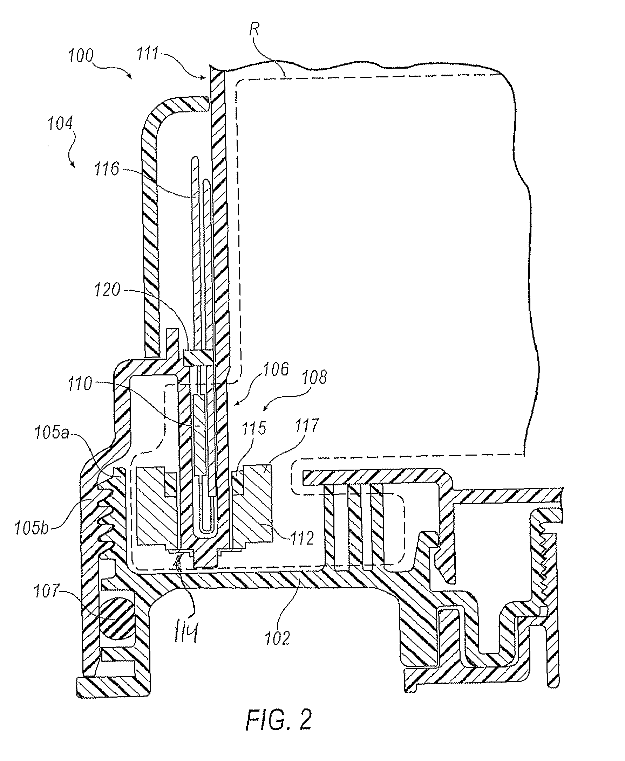

Unter Bezugnahme nun auf Figur 1A, 1B und 2 ist ein Behälter oder Tank 100 dargestellt. Der Behälter 100 kann ein Konditionierungsmodul für Treibstoff auf Kohlenwasserstoffbasis sein, das zum Sammeln von Wasser konfiguriert ist, das aus einer Versorgung von Treibstoff auf Kohlenwasserstoffbasis, z.B. einer Dieseltreibstoffversorgung, entfernt wird. Zum Beispiel kann der Behälter 100 einen Einlass 101 und einen Auslass 103 zum Aufnehmen beziehungsweise Abgeben einer Treibstoffversorgung enthalten. Des Weiteren ist der Behälter 100 so konfiguriert, dass Wasser aus der eintretenden Treibstoffversorgung entfernt oder filtriert wird, wodurch sich Wasser in dem Behälter 100 ansammelt, z.B. innerhalb des Reservoirs R (das durch Strichlinien angezeigt ist) des Behälters 100. Der Behälter 100 kann jeden bekannten Mechanismus zum Filtern oder Abtrennen von Wasser von einer einströmenden Treibstoffversorgung (nicht dargestellt) verwenden. Zum Beispiel kann der Behälter 100 ein hydrophobes Medium (nicht dargestellt) verwenden, das allgemein Wassermoleküle und/oder Kontaminanten aussiebt, die in einem Treibstoff auf Kohlenwasserstoffbasis enthalten sind. Das hydrophobe Medium kann quer zu einem Treibstoffstrom angeordnet sein, so dass der Treibstoff durch das hydrophobe Medium fließt, während Wassermoleküle durch das hydrophobe Medium zurückgehalten werden. Das gesiebte Wasser kann dann, da Wasser im Allgemeinen eine größere Dichte als Treibstoffe auf Kohlenwasserstoffbasis hat, durch Schwerkraft abwärts fließen und sich am Boden des Reservoirs R zur Entfernung ansammeln. Andere Kontaminanten können auch aus dem Treibstoffstrom ausgesiebt werden und zum Boden des Reservoirs R absinken. Mit anderen Worten, Wasser und andere Kontaminanten können im Allgemeinen in einem Bodenteil des Behälters 100 gesammelt werden. Des Weiteren kann der Behälter 10 alle anderen bekannten Vorrichtungen zum Sammeln von Wasser enthalten, das in einem Treibstoff auf Kohlenwasserstoffbasis enthalten ist. Der Behälter 100 kann des Weiteren ein Heizelement 109 enthalten. Das Heizelement 109 ist im Allgemeinen betriebsbereit, um dem angesammelten Wasser und/oder den Kontaminanten, die aus dem Treibstoff entfernt wurden, Wärme zuzuführen, um ein Einfrieren oder Härten der entfernten Kontaminanten zu verhindern, die in dem Reservoir R enthalten sind. Während ein Heizelement 109 dargestellt ist, können auch andere Erwärmungsmechanismen verwendet werden, wie die Anwendung von Abwärme von einem Fahrzeugbetrieb (zum Beispiel von einer Verbrennung des Treibstoffs auf Kohlenwasserstoffbasis). Das Heizelement 109 kann auch allgemein Treibstoff erwärmen, um unerwünschte Änderungen in der Zusammensetzung zu vermeiden, die durch Einwirkung extrem kalter Temperaturen verursacht werden. Der Behälter 100 kann auch einen Ablass (nicht dargestellt) enthalten, um Wasser, das aus einer Treibstoffversorgung filtriert wird, abzuleiten. Ein Ablass kann in vorteilhafter Weise an oder naher einer Bodenfläche des Behälters 100 angeordnet sein, so dass die Schwerkraft das Ausströmen von Wasser aus dem Behälter 100 fördert, wenn der Ablass geöffnet wird, und ferner neigt Wasser, das aus der Treibstoffversorgung entfernt wird, dazu, sich nahe dem Ablass anzusammeln.

Der Behälter 100 enthält ein Basiselement 102 und eine Abdeckung 104. Das Basiselement 102 und die Abdeckung 104 können durch alle bekannten Kunststoffformungsprozesse gebildet werden, zum Beispiel aus einem Kunststoffmaterial geformt oder blasgeformt werden. Zum Beispiel sind in einem Beispiel das Basiselement 102 und die Abdeckung 104 aus PA66, einem Polyyamid-Nylonmaterial, gebildet. Das Basiselement 102 und die Abdeckung 104 wirken zusammen, um im Allgemeinen das Reservoir R des Behälters 100 zu definieren. Mit anderen Worten, das Basiselement 102 und die Abdeckung 104 wirken zusammen, um ein im Allgemeinen eingeschlossenes Volumen zu definieren, das Wasser sammelt, das aus der Dieseltreibstoffversorgung entfernt wurde. Das Basiselement 102 und die Abdeckung 104 sind aneinander befestigt und können komplementäre Gewinde 105a beziehungsweise 105b definieren, wie in Fig. 2 dargestellt ist. Die komplementären Gewinde 105a, 105b des Basiselements 102 und der Abdeckung 104 können einen Einbau und Zusammenbau des Behälters 100 von einer oberen Seite des Basiselements 102 ermöglichen. Zum Beispiel ist das Basiselement 102 so konfiguriert, dass es in ein Fahrzeug an einer gewünschten Montagestelle für den Behälter 100 eingebaut werden kann. das Basiselement 102 kann innerhalb eines Fahrzeuges positioniert und an diesem befestigt werden, z.B. mit einem oder mehreren mechanischen Befestigungsmitteln (nicht dargestellt), durch Binden oder dergleichen. Die Abdeckung 104 kann dann an dem Basiselement 102 angebracht werden, indem im Allgemeinen die Abdeckung 104 gedreht wird, während sie gegen eine obere Seite des Basiselements 102 gehalten wird, wodurch die komplementären Gewinde 105a, 105b in Eingriff gelangen und das Reservoir R allgemein umschlossen wird. Zusätzlich können das Basiselement 102 und/oder die Abdeckung 104 eine Dichtung 107 enthalten, die im Allgemeinen verhindert, dass Wasser, das in dem Behälter 100 enthalten ist, aus dem Volumen R austritt.

Wie am besten in Fig. 2 dargestellt ist, kann die Abdeckung 104 ein Gehäuse 111 enthalten, das eine Tasche 106 definiert. Die Tasche 106 nimmt eine Flüssigkeitspegelsensorgruppe 108 auf, die so konfiguriert ist, dass sie eine Wassermenge erfasst, die in dem Behälter 100, z.B. in dem Reservoir R, enthalten ist. Wie zum Beispiel in Fig. 1A, 1B und 2 dargestellt ist, kann das Gehäuse 111 allgemein eine Tasche 106 definieren, die sich in das Reservoir R erstreckt. Daher kann die Tasche 106 integral in dem Gehäuse 11 und/oder der Abdeckung 104 gebildet sein. Wie in Fig. 2 dargestellt ist, kann sich die Tasche 106 allgemein in das Reservoir R erstrecken, wodurch der Flüssigkeitspegelsensor 108 eine Wassermenge bestimmen kann, die in dem Reservoir R enthalten ist. Die Tasche 106 ist im Allgemeinen von dem Reservoir R isoliert oder verhindert zumindest das Eindringen von Flüssigkeiten, die in dem Reservoir R enthalten sind, in die Tasche 106. Des Weiteren, wie in Fig. 2 dargestellt ist, enthält die Tasche 106 einen Stopfen 120, der im Allgemeinen ein Eindringen von externen Kontaminanten verhindert, wodurch der Flüssigkeitspegelsensor 108 vor einer Verunreinigung oder Beschädigung geschützt ist. Die Tasche 106 kann zusätzlich eine Verbindung enthalten, die im Allgemeinen die Tasche 106 füllt, wodurch der Flüssigkeitspegelsensor 106, und insbesondere im Allgemeinen eine Umgebung eines Schalters 110 des Flüssigkeitspegelsensors, vor einer Beschädigung aufgrund von Vibration, Schock, externen Kontaminanten, usw. geschützt ist.

Der Flüssigkeitspegelsensor 108 kann im Allgemeinen einen Schalter 110 und ein Stellglied 112 enthalten. Wie in Fig. 2 dargestellt ist, ist der Schalter 110 im Allgemeinen in der Tasche 106 angeordnet. Das Stellglied 112 ist im Allgemeinen zum Aktivieren des Schalters 110 gemäß einem Fluidpegel in dem Reservoir R konfiguriert. Mit anderen Worten, das Stellglied 112 spricht auf Änderungen im Fluidpegel in dem Reservoir R an. Wie zum Beispiel in Fig. 2 dargestellt ist, kann das Stellglied 112 einen Magneten 115 und einen Schwimmer 117 enthalten, der um die Tasche 106 mit einer Schiebemutter 114 gehalten wird. Der Schwimmer 117 kann aus einem schwimmenden Material gebildet sein und ist so konfiguriert, dass er mit dem Wasserpegel steigt, der in dem Reservoir R enthalten ist. Der Magnet 115 kann jedes magnetische Material oder jede andere Vorrichtung sein, das/die so konfiguriert ist, dass ein Magnetfeld um den Schalter 110 induziert wird, wenn der Schwimmer 117 ausreichend steigt, um den Magneten 115 neben den Schalter 110 zu bringen. Daher ist das Stellglied 112 um die Tasche 106 angeordnet und so konfiguriert, dass es als Reaktion auf eine Änderung in der Flüssigkeitsmenge, die in dem Reservoir R enthalten ist, entlang der Tasche 106 verschoben wird. Wenn das Stellglied 112 auf einen vorbestimmten Pegel steigt, kann der Schalter 110 als Reaktion auf das Induzieren eines elektromagnetischen Feldes durch das Stellglied 12 geöffnet oder geschlossen werden, wodurch ein Signal bereitgestellt wird, das anzeigt, dass der Flüssigkeitspegel in dem Reservoir R den vorbestimmten Pegel erreicht hat.

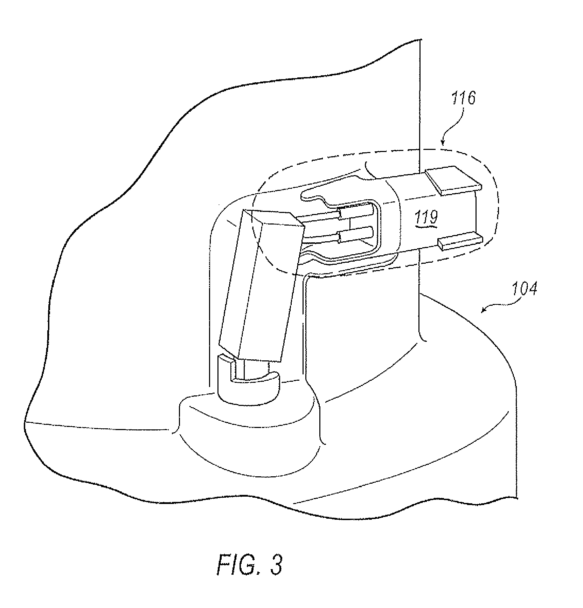

Der Schalter 110 kann einen oder mehrere elektrische Kontakte 116 enthalten, die eine elektrische Kommunikation zwischen dem Schalter 110 und zum Beispiel einer Anzeige (nicht dargestellt) ermöglichen, die dem Fahrzeugbetreiber anzeigt, dass der Wasserpegel in dem Reservoir R einen vorbestimmten Pegel erreicht hat. Elektrische Kontakte 116 sind vorteilhafterweise an einer oberen Seite des Basiselements 102 bereitgestellt. Mit anderen Worten, nachdem die Abdeckung 104 an dem Basiselement 102 von einer im Allgemeinen oberen Seite des Basiselements 102 befestigt wurde, können die elektrischen Kontakte 116 an eine Verdrahtung an derselben Seite des Basiselements 102 angeschlossen werden, d.h., an der oberen Seite des Basiselements 102. Die Bereitstellung von elektrischen Kontakten 116 an derselben oberen Seite des Basiselements 102 vereinfacht dadurch den Zusammenbau des Behälters 100, da die elektrischen Verbindungen für den Behälter 100 für einen Monteur leicht zugänglich sind. Des Weiteren kann die Abdeckung 104 von dem Basiselement 102 entfernt werden, ohne die elektrischen Kontakte 116 von der Abdeckung 104 zu entfernen. Wie in Fig. 3 dargestellt ist, können die elektrischen Kontakte 116 mit einem Schnappverbinder 119, wie dargestellt, einer Abdeckung bereitgestellt sein oder auf andere Weise vor externen Kontaminanten geschützt sein.

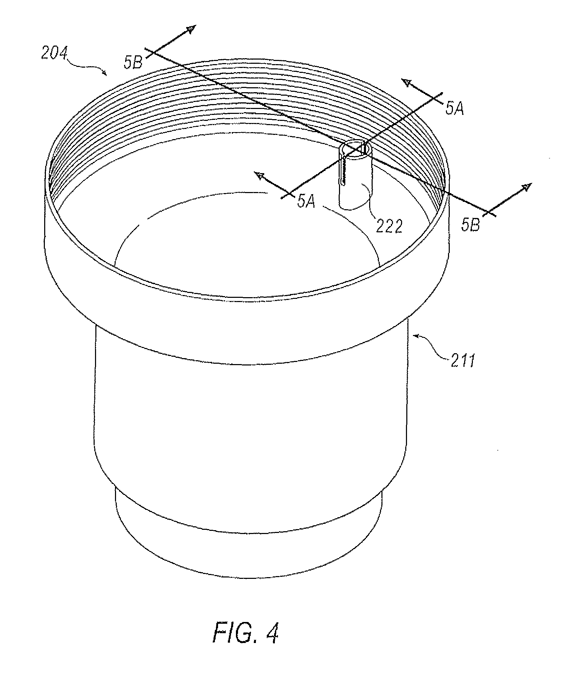

Unter Bezugnahme nun auf Fig. 4-5 ist eine andere beispielhafte Abdeckung 204 dargestellt. Wie bei der zuvor beschriebenen Abdeckung 104 kann die Abdeckung 204 mit einem Basiselement (nicht dargestellt) zusammenwirken, um ein Reservoir R eines Behälters oder Tanks, z.B. eines Treibstoffkonditionierungsmoduls, zu definieren. Zum Beispiel kann die Abdeckung 204 auch ein komplementäres Gewinde enthalten, so dass eine Montage von einer oberen Seite eines Basiselements möglich ist.

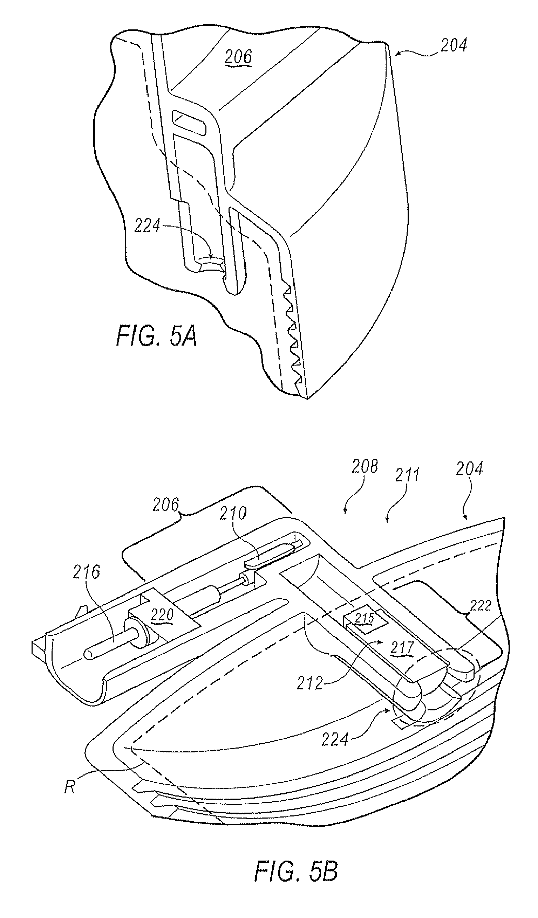

Wie am besten in Fig. 5B erkennbar ist, enthält die Abdeckung 204 ein Hauptgehäuse 211 und eine Tasche 206, die sich von einer Außenfläche des Hauptgehäuses 211 erstreckt. Die Tasche 206 kann durch die Abdeckung 204 definiert sein oder innerhalb der Abdeckung 204 gebildet sein. Die Tasche 206 ist vorzugsweise vom Reservoir R isoliert, um ein Eindringen von Flüssigkeit zu verhindern, die in dem Reservoir R enthalten ist. Die Tasche 206 kann des Weiteren einen Stopfen 220 enthalten, um ein Eindringen externer Kontaminanten zu verhindern. Die Tasche 206 kann außerhalb des Reservoirs R angeordnet sein. Daher ist die Tasche 206 an einer Außenfläche des Gehäuses 211 gebildet und ragt im Allgemeinen nicht in das Reservoir R des Behälters.

Die Abdeckung 204 enthält des Weiteren einen Flüssigkeitspegelsensor 208, der einen Schalter 210 und ein Stellglied 212 enthält. Der Schalter 210 ist im Allgemeinen in der Tasche 206 angeordnet. Wie zum Beispiel im Allgemeinen ähnlich dem zuvor beschriebenen Schalter 110 kann der Schalter 210 ein Reedschalter oder ein anderer Schalter sein, der so konfiguriert ist, dass es auf das Induzieren eines elektromagnetischen Feldes anspricht. Das Stellglied 212 ist im Allgemeinen so konfiguriert, dass es den Schalter 210 in Übereinstimmung mit Änderungen im Fluidpegel aktiviert, der im Reservoir R enthalten ist. Zum Beispiel kann das Stellglied 212 im Allgemeinen den Schalter 210 öffnen oder schließen, wenn das Fluid einen vorbestimmten Pegel erreicht, wodurch das Stellglied 212 in enge Nähe zu dem Schalter 210 bewegt wird. Das Stellglied 212 kann einen Magneten 215 und einen Schwimmer 217 enthalten. Das Stellglied 212 wird im Allgemeinen in einem Hohlraum 222 gehalten, der in betriebsbereiter Kommunikation mit Flüssigkeit steht, die in dem Reservoir R enthalten ist. Mit anderen Worten, das Stellglied 212 spricht im Allgemeinen auf Änderungen im Flüssigkeitspegel an, der im Reservoir R enthalten ist. Zum Beispiel kann der Schwimmer 217 aus einem schwimmenden Material gebildet sein, das im Allgemeinen mit dem Wasserpegel, der im Reservoir R enthalten ist, steigt oder sinkt. Wenn das Stellglied 212 innerhalb des Hohlraums 222 steigt, wird der Magnet 215 in die Nähe des Schalters 110 gebracht, wodurch ein Magnetfeld um den Schalter 210 induziert wird, das den Schalter 210 öffnen oder schließen kann, wodurch ein elektrisches Signal 216 bei den elektrischen Kontakten 216 ausgelöst wird. Der Hohlraum 222 kann mit einer unterhöhlten Lippe 224 bereitgestellt sein, wie am besten in Fig. 5A erkennbar ist, die im Allgemeinen das Stellglied 212 innerhalb des Hohlraums 222 hält. Ferner kann eine unterhöhlte Lippe 224 das Einsetzen eines Stellglieds 212 in den Hohlraum 222 während der Montage ermöglichen, während das Stellglied 212 weiterhin in dem Hohlraum 222 beim Einsetzen befestigt ist, wodurch im Allgemeinen die Montage der Abdeckung 204 erleichtert wird. Wie zum Beispiel in Fig. 5A dargestellt ist, hat die unterhöhlte Lippe 224 eine gewinkelte oder geneigte Seite, die mit Kerben zusammenwirkt, die in den Seiten des Hohlraums 222 bereitgestellt sind, so dass das Stellglied 222 im Allgemeinen die Seiten des Hohlraumes 222 nach außen schiebt, wenn das Stellglied 212 in den Hohlraum 222 eingesetzt wird. Nach dem Einsetzen des Stellglieds 212 in den Hohlraum 222 verhindert die unterhöhlte Lippe 224 im Allgemeinen einen Austritt des Stellglieds 212 aus dem Hohlraum 222.

Wie kurz zuvor beschrieben, enthält die Abdeckung 204 einen oder mehrere elektrische Kontakte 216, die mit dem Schalter 210 in elektrischer Kommunikation stehen. Die elektrischen Kontakte 216 können an einer im Allgemeinen oberen Seite der Abdeckung 204 bereitgestellt sein, so dass alle Verdrahtungsanordnungen oder Verbinder (nicht dargestellt), die zum Anschließen des Schalters 210 an eine Anzeige (nicht dargestellt) verwendet werden, an dem elektrischen Kontakt 216 an der oberen Seite der Abdeckung 204 befestigt werden können. Ferner kann die Abdeckung 204 an einem Basiselement (nicht dargestellt), das an einem Fahrzeug befestigt ist, von einer oberen Seite des Basiselements (nicht dargestellt) montiert werden, ähnlich wie die zuvor beschriebene Abdeckung 104. Daher kann die Abdeckung 204 von derselben Seite des Basiselements montiert werden, wie jener, an der die elektrische Verbindung 216 bereitgestellt ist. Daher ist eine Montage eines Tanks oder eines Behälters, der eine Abdeckung 204 verwendet, relativ einfach, da ein Monteur nicht um das Basiselement greifen muss, um die elektrischen Verbindungen für den Behälter herzustellen.

In Bezug auf die hierin beschriebenen Prozesse, Systeme, Methoden, Heuristiken, usw. sollte klar sein, dass, obwohl die Schritte solcher Prozesse, usw. so beschrieben wurden, dass sie in einer bestimmten geordneten Reihenfolge auftreten, solche Prozesse mit den beschriebenen Schritten durchgeführt werden können, die in einer anderen Reihenfolge als der hierin beschriebenen Reihenfolge durchgeführt werden. Des Weiteren sollte offensichtlich sein, dass gewisse Schritte gleichzeitig ausgeführt werden können, dass andere Schritte hinzugefügt werden können oder dass gewisse, hierin beschriebene Schritte unterlassen werden können. Mit anderen Worten, die vorliegenden Beschreibungen von Prozessen dienen dem Zweck der Darstellung von gewissen Methoden, Beispielen oder Ausführungsformen, und sollten in keiner Weise als Einschränkung der beanspruchten Erfindung verstanden werden.

Daher ist offensichtlich, dass sie vorangehende Beschreibung veranschaulichend und nicht einschränkend sein soll. Viele Ausführungsformen und Anwendungen, die nicht die bereitgestellten Beispiele sind, wären für den Fachmann beim Lesen der vorangehenden Beschreibung offensichtlich. Der Umfang der Erfindung sollte nicht unter Bezugnahme auf die vorangehende Beschreibung bestimmt werden, sondern sollte stattdessen unter Bezugnahme auf die beiliegenden Ansprüche bestimmt werden, in Verbindung mit dem vollen Umfang von Äquivalenten, zu welchen solche Ansprüche berechtigt sind. Es wird erwartet und vorausgesetzt, dass zukünftige Entwicklungen in der hierin beschriebenen Technik stattfinden werden und dass die offenbarten Systeme und Methoden in solche zukünftige Ausführungsformen eingegliedert werden. In Summe sollte offensichtlich sein, dass die Erfindung Modifizierungen und Variationen unterzogen werden kann und nur durch die folgenden Ansprüche begrenzt ist.

Alle Begriffe, die in den Ansprüchen verwendet werden, sind in ihren weitesten vernünftigen Konstruktionen und ihren üblichen Bedeutungen zu verstehen, wie dem Fachmann bekannt ist, falls nicht ausdrücklich anders angegeben. Insbesondere sollte die Verwendung der Artikel im Singular, wie "ein/eine/eines", "der/die/das", "genannter/genannte/genanntes" usw., so verstanden werden, dass ein oder mehrere der angegebenen Elemente gemeint sind, wenn nicht ein Anspruch eine ausdrückliche gegensätzliche Einschränkung nennt.

## Patentansprüche

1. Behälter, umfassend:
ein Basiselement;
eine Abdeckung, die mit dem Basiselement zusammenwirkt, um ein Reservoir zur Aufnahme einer Flüssigkeit zu definieren, wobei die Abdeckung eine Tasche definiert, die integral mit der Abdeckung gebildet ist, wobei die Tasche im Allgemeinen einen Eintritt der Flüssigkeit in das Reservoir verhindert; und
einen Flüssigkeitspegelsensor, enthaltend:
einen Schalter, der in der Tasche aufgenommen ist; und
ein Stellglied, das so konfiguriert ist, dass es den Schalter aktiviert, wenn das Fluid in dem Reservoir einen vorbestimmten Pegel erreicht.

2. Behälter nach Anspruch 1, wobei die Abdeckung an der oberen Seite des Basiselements angeordnet ist und eine elektrische Verbindung für den Schalter neben der Tasche enthält, wobei die elektrische Verbindung von derselben Seite des Basiselements wie die Abdeckung zugänglich ist.

3. Behälter nach Anspruch 1, wobei die Tasche in das Reservoir ragt.

4. Behälter nach Anspruch 3, wobei das Stellglied um die Tasche angeordnet ist und so konfiguriert ist, dass es sich als Reaktion auf eine Änderung in der Flüssigkeitsmenge, die in dem Reservoir enthalten ist, entlang der Tasche verschiebt.

5. Behälter nach Anspruch 1, wobei die Tasche außerhalb des Reservoirs angeordnet ist.

6. Behälter nach Anspruch 5, wobei das Stellglied innerhalb des Reservoirs angeordnet ist.

7. Behälter nach Anspruch 5, wobei das Stellglied innerhalb eines Hohlraumes angeordnet ist, der durch die Abdeckung definiert ist, wobei sich der Hohlraum in betriebsbereiter Verbindung mit der Flüssigkeit im Inneren des Reservoirs befindet.

8. Behälter nach Anspruch 1, wobei das Stellglied einen Magneten enthält und der Schalter auf ein Feld anspricht, das durch den Magneten induziert wird.

9. Verbindung nach Anspruch 1, des Weiteren umfassend einen Stopfen, der so konfiguriert ist, dass im Allgemeinen ein Eindringen externer Kontaminanten in die Tasche verhindert wird.

10. Behälter, umfassend:
ein Basiselement;
eine Abdeckung, die mit dem Basiselement zusammenwirkt, um ein Reservoir zur Aufnahme einer Flüssigkeit zu definieren, wobei die Abdeckung eine Tasche enthält, die außerhalb des Reservoirs angeordnet ist, wobei die Tasche so konfiguriert ist, dass sie im Allgemeinen einen Eintritt von Flüssigkeit in das Reservoir verhindert; und
einen Flüssigkeitspegelsensor, enthaltend:
einen Schalter, der in der Tasche aufgenommen ist; und ein Stellglied, das so konfiguriert ist, dass es den Schalter aktiviert, wenn das Fluid in dem Reservoir einen vorbestimmten Pegel erreicht.

11. Behälter nach Anspruch 10, wobei das Stellglied in dem Reservoir angeordnet ist.

12. Behälter nach Anspruch 11, wobei das Stellglied innerhalb eines Hohlraumes angeordnet ist, der durch die Abdeckung definiert ist, wobei sich der Hohlraum in betriebsbereiter Verbindung mit der Flüssigkeit im Inneren des Reservoirs befindet.

13. Behälter nach Anspruch 10, wobei die Abdeckung eine elektrische Verbindung für den Schalter neben der Tasche enthält, wobei die elektrische Verbindung eine elektrische Kommunikation zwischen dem Schalter und einer Anzeige ermöglicht, die so konfiguriert ist, dass sie anzeigt, wann die Flüssigkeit den vorbestimmten Pegel erreicht.

14. Behälter nach Anspruch 10, wobei die Tasche mit der Abdeckung integral gebildet ist.

15. Behälter nach Anspruch 10, wobei das Stellglied einen Magneten enthält und der Schalter auf ein Feld anspricht, das durch den Magneten induziert wird.

16. Behälter nach Anspruch 10, des Weiteren umfassend einen Stopfen, der so konfiguriert ist, dass er im Allgemeinen ein Eindringen externer Kontaminanten in die Tasche verhindert.

17. Abdeckung für einen Behälter, umfassend:
ein Gehäuse, das so konfiguriert ist, dass es mit einem Basiselement zusammenwirkt, um ein Reservoir zur Aufnahme einer Flüssigkeit zu definieren, wobei das Gehäuse eine Tasche definiert, die außerhalb des Reservoirs angeordnet ist, wobei die Tasche so konfiguriert ist, dass sie im Allgemeinen ein Eindringen von Flüssigkeit in das Reservoir verhindert; und
einen Flüssigkeitspegelsensor, enthaltend:
einen Schalter, der in der Tasche aufgenommen ist; und
ein Stellglied, das so konfiguriert ist, dass es den Schalter aktiviert, wenn das Fluid in dem Reservoir einen vorbestimmten Pegel erreicht.

18. Abdeckung nach Anspruch 17, wobei das Stellglied in dem Reservoir angeordnet ist.

19. Abdeckung nach Anspruch 18, wobei das Stellglied innerhalb eines Hohlraumes angeordnet ist, der durch die Abdeckung definiert ist, wobei sich der Hohlraum in betriebsbereiter Verbindung mit der Flüssigkeit im Inneren des Reservoirs befindet.

20. Abdeckung nach Anspruch 17, wobei die Abdeckung eine elektrische Verbindung für den Schalter neben der Tasche enthält, wobei die elektrische Verbindung eine elektrische Kommunikation zwischen dem Schalter und einer Anzeige ermöglicht, die so konfiguriert ist, dass sie anzeigt, wann die Flüssigkeit den vorbestimmten Pegel erreicht.
